# EUROPEAN PATENT APPLICATION

(11) **EP 4 847 470 A1**
(43) Date of publication of application: **02.12.2026**
(21) Application number: 25863340.3
(22) Date of filing: 02.09.2025
(51) Int. Cl.: C04B 28/02, C04B 22/06, C04B 22/10, C04B 22/14, C04B 24/04

(54) **CONCRETE COMPOSITION, CURED BODY, AND METHOD FOR PRODUCING CURED BODY**

(30) Priority: 03.09.2024 JP 2024151560
(71) Applicant: Denka Company Limited, Tokyo 103-8338 (JP)
(72) Inventor: TANAKADATE, Yuto, Tokyo 103-8338 (JP); AIZAWA, Kazuhiro, Tokyo 103-8338 (JP); HIGUCHI, Takayuki, Tokyo 103-8338 (JP)
(74) Representative: Gulde & Partner
(86) International application number: PCT/JP2025/030959
(87) International publication number: WO 2026/053955

(57) **Abstract**

A concrete composition including a binder, a hardening accelerator for a hydraulic material, and water, in which a binder blending amount is 300 kg/m³ or more, a water-binder ratio is 55% or less, an addition amount of the hardening accelerator for a hydraulic material is 1 to 50 kg/m³, and the hardening accelerator for a hydraulic material contains 20.0 to 80.0 mass% of calcium formate, 15.0 to 70.0 mass% of an inorganic calcium compound, and 0.5 to 30.0 mass% of an inorganic sulfate excluding calcium sulfate.

## Description

### Technical Field

The present invention relates to a concrete composition, a cured body, and a method for producing the cured body.

### Background Art

A hydraulic material, such as cement, used in civil engineering and building fields usually hardens by being mixed with water and left to stand for a predetermined time. Although a hardening rate of a hydraulic material may be affected by a ratio between the material and water, an ambient environmental temperature, and a curing method, the time until the hydraulic material hardens may be shortened by using an admixture that accelerates hardening, namely a hardening accelerator.

Shortening the time until a hydraulic material hardens leads to improvement in productivity at a work site. For example, a concrete cured body used in a precast method used for reinforced concrete buildings and the like is generally obtainable by placing a cement composition in a formwork, leaving the cement composition to stand for a predetermined time, and further curing the cement composition by steam curing or the like; however, use of a hardening accelerator can shorten the time until initial strength allowing demolding is reached, and therefore a cured body may be produced efficiently.

Further, ordinarily, after a cement composition is placed, "compaction" is performed using a vibrating machine (vibrator) or the like in order to uniformly spread the cement composition throughout a formwork; however, when fluidity of the cement composition has decreased immediately after placement, labor and time for performing compaction are required, and productivity decreases.

Regarding hardening accelerators, for example, Patent Literature 1 discloses a hardening accelerator for a hydraulic material that includes predetermined amounts of an inorganic sulfate, calcium sulfoaluminate, and an inorganic hydroxide. Patent Literature 2 discloses a cement admixture including calcium sulfoaluminate having a Blaine specific surface area value of 4000 cm²/g or more and one or more types selected from the group consisting of formates, acetates, and lactates.

### Citation List

### Patent Literature

Patent Literature 1: JP 2014-19618 A
Patent Literature 2: JP 2010-235399 A

### Summary of Invention

### Technical Problem

However, a hydraulic material using a hardening accelerator as described above loses fluidity immediately after mixing with water, and labor and time are required for compaction performed after placement; therefore, there is a concern that productivity decreases.

In view of the above, an object of the present invention is to provide a concrete composition having favorable fluidity retention, setting property, and initial strength development property.

### Solution to Problem

The present inventors conducted intensive studies in order to solve the problems described above, and as a result, found that the problems can be solved by a concrete composition including a binder, a hardening accelerator for a hydraulic material, and water, in which a binder blending amount, a water-binder ratio, and an addition amount of the hardening accelerator for a hydraulic material are within predetermined ranges, and the hardening accelerator for a hydraulic material has a specific composition, thereby completing the present invention. Specifically, the present invention is as follows.
[1] A concrete composition including a binder, a hardening accelerator for a hydraulic material, and water, wherein a binder blending amount is 300 kg/m³ or more, a water-binder ratio is 55% or less, an addition amount of the hardening accelerator for a hydraulic material is 1 to 50 kg/m³, and the hardening accelerator for a hydraulic material contains 20.0 to 80.0 mass% of calcium formate, 15.0 to 70.0 mass% of an inorganic calcium compound, and 0.5 to 30.0 mass% of an inorganic sulfate excluding calcium sulfate.
[2] The concrete composition according to [1] above, wherein the inorganic calcium compound is one or more types selected from the group consisting of calcium sulfate, calcium hydroxide, calcium carbonate, and calcium oxide.
[3] The concrete composition according to [1] or [2] above, wherein the inorganic sulfate is one or more types selected from the group consisting of sulfates, thiosulfates, sulfites, bisulfites, pyrosulfates, and pyrosulfites.
[4] The concrete composition according to any one of [1] to [3] above, wherein the binder contains 1 to 15 mass% of calcium sulfoaluminate.
[5] A cured body obtained by hardening the concrete composition according to any one of [1] to [4] above.
[6] A method for producing a cured body, the method including curing and hardening the concrete composition according to any one of [1] to [4] above under a condition of a temperature of 40°C or lower.

### Advantageous Effects of Invention

According to the present invention, a concrete composition having favorable fluidity retention, setting property, and initial strength development property is provided.

### Description of Embodiments

Hereinafter, one embodiment of the present invention (the present embodiment) will be described in detail, but the present invention is not limited to the embodiment. In the present specification, "%" and "parts" are based on mass unless otherwise specified.

### [Concrete Composition]

The concrete composition according to the present embodiment is a concrete composition including a binder, a hardening accelerator for a hydraulic material, and water, in which a binder blending amount is 300 kg/m³ or more, a water-binder ratio is 55% or less, an addition amount of the hardening accelerator for a hydraulic material is 1 to 50 kg/m³, and the hardening accelerator for a hydraulic material contains 20.0 to 80.0 mass% of calcium formate, 15.0 to 70.0 mass% of an inorganic calcium compound, and 0.5 to 30.0 mass% of an inorganic sulfate excluding calcium sulfate. The concrete composition of the present invention has favorable fluidity retention, setting property, and initial strength development property, and is also suitable for producing precast concrete or the like. Further, for example, in the case of precast concrete, sufficient hardening is achieved without use of steam curing, which is advantageous in terms of energy consumption and CO₂ emissions.

In the present invention, the term "binder" refers to a generic term for substances that react with water and generate substances contributing to strength development of concrete, and examples include cement, calcium aluminate, calcium sulfoaluminate, blast furnace slag, fly ash, silica fume, limestone fine powder, metakaolin, allophane, and the like; the amount of the binder in the binder blending amount and the water-binder ratio refers to the total amount of these substances. Further, the "hardening accelerator for a hydraulic material" of the present invention not only accelerates hardening of a hydraulic material when the hydraulic material in the binder is kneaded with water and hardens, but also the hardening accelerator for a hydraulic material itself sometimes hardens while accelerating the hardening.

The concrete composition of the present invention preferably contains at least cement as the binder. The type of cement is not particularly limited, and examples include various Portland cements such as ordinary Portland cement, high-early-strength Portland cement, ultra-high-early-strength Portland cement, low-heat Portland cement, and moderate-heat Portland cement; environment-conscious cement (eco-cement) produced using municipal solid waste incineration ash or sewage sludge incineration ash as a raw material; commercially available fine particle cement; white cement; and the like, and various cements may also be pulverized into fine powder and used. Further, materials adjusted by increasing or decreasing the amount of components normally used in cement (for example, gypsum or the like) may also be used. Furthermore, combinations of two or more of these may also be used. From the viewpoint of enhancing initial strength development property, ordinary Portland cement or high-early-strength Portland cement is preferably selected.

From the viewpoints of production cost and strength development property, the cement used in the present invention preferably has a Blaine specific surface area value (hereinafter also simply referred to as a "Blaine value") of 2,500 to 7,000 cm²/g, more preferably 2,750 to 6,000 cm²/g, and still more preferably 3,000 to 4,500 cm²/g. In the present invention, the Blaine specific surface area value is measured in accordance with a specific surface area test specified in JIS R 5201:2015, "Physical testing methods for cement".

The content of cement is preferably 20.0 parts by mass or more, more preferably 50.0 parts by mass or more, and still more preferably 60.0 parts by mass or more, relative to 100 parts by mass of the binder in the concrete composition. When the content of cement is within the above range, fluidity retention and initial strength development property of the concrete composition may be made more favorable.

The concrete composition of the present invention may contain calcium sulfoaluminate as the binder. Calcium sulfoaluminate is a generic term for hydraulic substances and hydrated salts represented by chemical formula xCaO·yAl₂O₃·zCaSO₄·mH₂O (x, y, and z are positive real numbers that are not 0, and m is 0 or a positive real number), and examples include, in addition to hauyne (3CaO·3Al₂O₃·CaSO₄), an AFt phase typified by ettringite (3CaO·Al₂O₃·3CaSO₄·32H₂O), an AFm phase typified by monosulfate (3CaO·Al₂O₃·CaSO₄·12H₂O), and a material in which an AFt phase and an AFm phase coexist. Calcium sulfoaluminate may be amorphous. Further, a part of Al₂O₃ may be replaced with a trace amount of Fe₂O₃ or SiO₂ or the like, and a part of CaSO₄ may be replaced with Ca(OH)₂ or CaCO₃ or the like. In the present invention, in the above chemical formula xCaO·yAl₂O₃·zCaSO₄·mH₂O, z is not permitted to be 0 because fluidity of a hydraulic material is no longer retained, and strength during hardening may decrease due to phase transition.

Calcium sulfoaluminate may be produced by using, as raw materials, a calcia raw material such as lime, a sulfate raw material such as gypsum, and an alumina raw material such as bauxite (aluminum hydroxide), blending the raw materials at a predetermined proportion such as, for example, a molar ratio of CaO:CaSO₄:Al₂O₃ of 3:3:1, calcining at about 1,500°C using a kiln or the like, and grinding. Further, a once-calcined material may be heat-treated after addition of silicon dioxide or the like and then ground.

The Blaine specific surface area value of calcium sulfoaluminate is preferably 1,000 to 6,000 cm²/g, more preferably 2,000 to 4,000 cm²/g, and still more preferably 2,200 to 3,800 cm²/g.

The content of calcium sulfoaluminate is preferably 1 to 15 mass%, more preferably 1 to 8 mass%, and still more preferably 2 to 5 mass%, in the binder. When the content of calcium sulfoaluminate is within the above range, fluidity retention and initial strength development property of the concrete composition may be made more favorable.

The concrete composition of the present invention may contain a siliceous fine powder as the binder. When the concrete composition contains the siliceous fine powder, fluidity retention and initial strength development property tend to be made favorable. Examples of the siliceous fine powder include latent hydraulic substances such as blast furnace slag fine powder and pozzolanic substances such as fly ash, silica fume, metakaolin, and allophane, and among these, blast furnace slag fine powder, fly ash, and metakaolin are preferable.

The fineness of the siliceous fine powder is not particularly limited, but ordinarily the blast furnace slag fine powder and fly ash preferably have a Blaine value in the range of 3,000 to 9,000 cm²/g, and the silica fume preferably has a BET specific surface area in the range of 20,000 to 300,000 cm²/g.

The content of the siliceous fine powder is preferably 5 to 60 parts by mass, more preferably 10 to 50 parts by mass, and still more preferably 20 to 40 parts by mass, relative to 100 parts by mass of the binder in the concrete composition. When the content of the siliceous fine powder is equal to or greater than the lower limit value, fluidity retention and initial strength development property tend to be made favorable. Furthermore, when the blending proportion of the siliceous fine powder is equal to or less than the upper limit value, fluidity retention tends to be made more favorable.

The binder blending amount in the concrete composition of the present invention is 300 kg/m³ or more. When the binder blending amount is less than 300 kg/m³, initial strength development property may become poor. Further, the binder blending amount is preferably 320 kg/m³ or more, more preferably 350 kg/m³ or more, and still more preferably 380 kg/m³ or more. Further, the binder blending amount is preferably 550 kg/m³ or less, more preferably 580 kg/m³ or less, and still more preferably 600 kg/m³ or less. When the binder blending amount is within the above range, initial strength development property may be made more favorable.

The water-binder ratio in the concrete composition of the present invention is 55% or less. The water-binder ratio (W/B) is a ratio of a blending amount of water to a blending amount of the binder, and when the water-binder ratio exceeds 55%, setting property may become poor. Further, the water-binder ratio is preferably 55% or less, more preferably 48% or less, and still more preferably 45% or less. Further, the lower limit is not particularly limited, but is preferably 20% or more. When the water-binder ratio is within the above range, setting property may be made more favorable.

### (Hardening Accelerator for Hydraulic Material)

The hardening accelerator for a hydraulic material in the present invention contains 20.0 to 80.0 mass% of calcium formate, 15.0 to 70.0 mass% of an inorganic calcium compound, and 0.5 to 30.0 mass% of an inorganic sulfate excluding calcium sulfate. When the content proportion of calcium formate is less than 20.0 mass%, fluidity retention, setting property, and initial strength development property of the concrete composition may not be made favorable, and when the content proportion of calcium formate exceeds 80.0 mass%, fluidity retention, setting property, and initial strength development property may not be made favorable. When the content proportion of the inorganic calcium compound is less than 15.0 mass%, fluidity retention, setting property, and initial strength development property of the concrete composition may not be made favorable, and when the content proportion of the inorganic calcium compound exceeds 70.0 mass%, fluidity retention, setting property, and initial strength development property of the concrete composition may not be made favorable. When the content proportion of the inorganic sulfate excluding calcium sulfate is less than 0.5 mass%, fluidity retention, setting property, and initial strength development property of the concrete composition may not be made favorable, and when the content proportion of the inorganic sulfate excluding calcium sulfate exceeds 30.0 mass%, fluidity retention, setting property, and initial strength development property of the concrete composition may not be made favorable.

The hardening accelerator for a hydraulic material in the concrete composition of the present invention preferably contains 25.0 to 75.0 mass% of calcium formate, more preferably contains 30.0 to 70.0 mass% of calcium formate, and still more preferably contains 40.0 to 65.0 mass% of calcium formate. When the content proportion of calcium formate is within the above range, fluidity retention, setting property, and initial strength development property of the concrete composition may be made more favorable.

The hardening accelerator for a hydraulic material in the concrete composition of the present invention preferably contains 18.0 to 65.0 mass% of the inorganic calcium compound, more preferably contains 20.0 to 60.0 mass% of the inorganic calcium compound, and still more preferably contains 22.0 to 40.0 mass% of the inorganic calcium compound. When the content proportion of the inorganic calcium compound is within the above range, fluidity retention, setting property, and initial strength development property of the concrete composition may be made more favorable.

In the present embodiment, the inorganic calcium compound is preferably one or more types selected from the group consisting of calcium sulfate, calcium hydroxide, calcium carbonate, and calcium oxide. When two or more types of inorganic calcium compounds are used, the total of the respective content proportions is taken as the content proportion of the inorganic calcium compound. In the present embodiment, from the viewpoint of initial strength development property, calcium sulfate, calcium hydroxide, and/or calcium oxide are preferably used, and calcium sulfate is more preferable. When calcium sulfate is used, an anhydrous form is more preferable.

The hardening accelerator for a hydraulic material in the concrete composition of the present invention preferably contains 1.0 to 25.0 mass% of the inorganic sulfate excluding calcium sulfate, more preferably contains 2.0 to 15.0 mass% of the inorganic sulfate excluding calcium sulfate, and still more preferably contains 3.0 to 10.0 mass% of the inorganic sulfate excluding calcium sulfate. When the content proportion of the inorganic sulfate excluding calcium sulfate is within the above range, fluidity retention, setting property, and initial strength development property of the concrete composition may be made more favorable.

In the present embodiment, the inorganic sulfate is preferably one or more types selected from the group consisting of sulfates, thiosulfates, sulfites, bisulfites, pyrosulfates, and pyrosulfites. When two or more types of inorganic sulfates are used, the total of the respective content proportions is taken as the content proportion of the inorganic sulfate. The inorganic species forming the salts are preferably alkali metals or alkaline earth metals. In the present embodiment, from the viewpoint of initial strength development property, using a sulfate and/or a thiosulfate is preferable, sodium sulfate, aluminum sulfate, sodium thiosulfate, and potassium alum are more preferable, sodium sulfate and aluminum sulfate are still more preferable from the viewpoint of initial strength development property, and among these, sodium sulfate is even still more preferable from the viewpoint of making fluidity retention favorable. When sodium sulfate is used, an anhydrous form is more preferable.

The addition amount of the hardening accelerator for a hydraulic material in the concrete composition of the present invention is 1 to 50 kg/m³. When the addition amount of the hardening accelerator for a hydraulic material is less than 1 kg/m³, initial strength development property may become poor, and when the addition amount exceeds 50 kg/m³, fluidity retention may become poor. The addition amount of the hardening accelerator for a hydraulic material is preferably 5 to 48 kg/m³, more preferably 10 to 45 kg/m³, and still more preferably 13 to 43 kg/m³. When the addition amount of the hardening accelerator for a hydraulic material is within the above range, fluidity retention, setting property, and initial strength development property of the concrete composition may be made more favorable.

The concrete composition of the present invention substantially contains aggregate, and as the aggregate to be used, fine aggregate and coarse aggregate similar to aggregates used in ordinary concrete may be used. Specifically, river sand, river gravel, mountain sand, mountain gravel, crushed stone, crushed sand, limestone aggregate, limestone sand, silica sand, colored sand, population aggregate, blast furnace slag aggregate, sea sand, sea gravel, artificial lightweight aggregate, heavyweight aggregate, and the like may be used, and combinations of the above may also be used.

The blending proportion of the aggregate is preferably 40 to 250 parts by mass, more preferably 50 to 230 parts by mass, and still more preferably 60 to 200 parts by mass, relative to 100 parts by mass of the cement in the concrete composition. When the blending proportion of the aggregate is within the above range, fluidity retention and initial strength development property of the concrete composition may be made more favorable.

The concrete composition may be blended with an alkali metal carbonate. When the concrete composition is blended with the alkali metal carbonate, fluidity retention and initial strength development property tend to be made favorable. Examples of the alkali metal carbonate include sodium carbonate, potassium carbonate, lithium carbonate, sodium hydrogen carbonate, potassium hydrogen carbonate, lithium hydrogen carbonate, and the like, and combinations of the above may also be used.

The blending proportion of the alkali metal carbonate is preferably 1 to 6 parts by mass and more preferably 2 to 5 parts by mass in terms of solid content, relative to 100 parts by mass of the cement in the concrete composition. When the content proportion of the alkali metal carbonate is within the above range, fluidity retention and initial strength development property tend to be made favorable.

The concrete composition may also be blended with a defoaming agent within a range that does not adversely affect performance. The defoaming agent is used for the purpose of suppressing the amount of air entrained during mixing. The type of the defoaming agent is not particularly limited as long as the defoaming agent does not significantly adversely affect strength characteristics of the cured body, and either a liquid form or a powder form may be used. Examples include polyether-based defoaming agents, polyhydric alcohol-based defoaming agents such as esterified products of polyhydric alcohols and alkyl ethers, alkyl phosphate-based defoaming agents, silicone-based defoaming agents, and the like.

The blending proportion of the defoaming agent is preferably 0.002 to 0.5 parts by mass, more preferably 0.005 to 0.45 parts by mass, and still more preferably 0.01 to 0.4 parts by mass, relative to 100 parts by mass of the cement in the concrete composition. When the blending proportion of the defoaming agent is equal to or greater than the lower limit value above, a defoaming effect may be sufficiently exhibited, and when the blending proportion of the defoaming agent is equal to or less than the upper limit value above, fluidity retention tends to be made favorable.

Further, in the concrete composition, one or more types among gas-foaming substances, water reducing agents, AE agents, rust inhibitors, water repellents, antibacterial agents, colorants, antifreezing agents, admixture materials such as limestone fine powder, slowly cooled blast furnace slag fine powder, sewage sludge incineration ash and molten slag thereof, municipal solid waste incineration ash and molten slag thereof, and pulp sludge incineration ash, thickeners, shrinkage reducing agents, polymers, clay minerals such as bentonite and sepiolite, and anion exchangers such as hydrotalcite may be used within a range that does not adversely affect performance and does not substantially impair the object of the present invention.

As fresh properties before placement of the concrete composition, when a slump value and a slump flow value are appropriate according to a product to be produced, placement and compaction are easily performed, workability improves, and occurrence of material separation may be suppressed.

The amount of change in slump one hour after kneading of the concrete composition (slump change amount) is preferably less than 10%, more preferably less than 7.5%, and still more preferably less than 5%. When the slump change amount of the concrete composition is within the above range, even when placement is performed one hour after kneading of the cement composition, placement and compaction are easily performed, and workability improves.

Further, the amount of change in slump flow one hour after kneading of the concrete composition (slump flow change amount) is preferably 50% or less, more preferably 40% or less, and still more preferably 30% or less.

In the present invention, slump may be measured in accordance with the method specified in JIS A 1101:2020, "Method of test for slump of concrete", and slump flow may be measured in accordance with the method specified in JIS A 1150:2020, "Method of test for slump flow of concrete". Further, the slump change amount may be determined by subtracting, from 100%, a value calculated as (slump one hour after kneading)/(slump immediately after kneading) x 100(%), and the slump flow change amount may be determined by subtracting, from 100%, a value calculated as (slump flow one hour after kneading)/(slump flow immediately after kneading) x 100(%).

The respective materials of the concrete composition may be mixed at the time of construction, or a part or all of the respective materials may be mixed in advance. As a mixing device, any existing device, for example, a tilting mixer, an omni mixer, a Henschel mixer, a V-type mixer, a Proshear mixer, a Nauta mixer, and the like may be used.

### [Cured Body]

The cured body according to the present embodiment is obtained by hardening the concrete composition of the present invention. In the cured body, ordinarily, when the concrete composition is kneaded, the cement undergoes a hydration reaction and hardens. The cured body is obtained by hardening the concrete composition by leaving the concrete composition to stand after kneading; however, the cured body may be obtained more efficiently by, after kneading, filling (placing) the concrete composition into a formwork and curing, or directly pouring, spraying, or applying the concrete composition to a construction location.

The compressive strength of the cured body depends on the type of cement used, but is preferably 8.5 N/mm² or more, more preferably 10.0 N/mm² or more, and still more preferably 11.0 N/mm² or more at 16 hours after placement. In the present invention, compressive strength may be measured in accordance with the method specified in JIS A 1108:2018, "Method of test for compressive strength of concrete".

### [Method for Producing Cured Body]

The method for producing a cured body according to the present embodiment is a method of curing and hardening the concrete composition of the present invention under a condition of a temperature of 40°C or lower. A cured body may be obtained by placing the concrete composition in a formwork and curing under the above conditions.

The temperature of the concrete composition during placement is preferably 0 to 50°C and more preferably 10 to 40°C. When the temperature of the concrete composition during placement is within the above range, demolding of the cured body tends to be facilitated.

In the method for producing a cured body of the present invention, compaction is preferably further performed after placement of the concrete composition. A known technique may be used as the compaction method, but from the viewpoint of workability, using a vibrating machine (vibrator) is preferable. Since fluidity immediately before placement is favorably retained in the concrete composition of the present invention, compaction may be easily performed, the concrete composition may be uniformly spread throughout the formwork, and air bubbles mixed during placement or the like may be removed.

The curing conditions in the method for producing a cured body of the present invention include a temperature of 40°C or lower, preferably 35°C or lower. Further, the humidity is preferably 80%RH or less and more preferably 70%RH or less. As the curing time, 24 hours or less is preferable, a curing time of 16 hours or less is more preferable, and a curing time of 12 hours or less is still more preferable. From the viewpoint of reducing CO₂ emissions, steam curing is preferably not used in the present invention.

### Examples

Hereinafter, the present invention will be further described based on experimental examples, but the present invention is not limited to the experimental examples.

### <Experimental Example 1>

Using the following materials, a hardening accelerator for a hydraulic material containing 60 mass% of calcium formate, 35 mass% of calcium sulfate, and 5 mass% of sodium sulfate were prepared, and concrete compositions shown in Table 1 were prepared. The slump of the obtained concrete compositions was measured, and a slump change amount was calculated. An initial setting time was also measured. The slump change amount and the initial setting time are also shown in Table 1.

Further, the prepared cement composition was filled into a formwork having dimensions of φ10 x 20 cm, and then cured for 24 hours under conditions of a temperature of 20°C and a humidity of 70%RH to obtain a cured body. The compressive strength of the obtained cured body was measured. The results are also shown in Table 1.

### (Materials Used)

Cement: ordinary Portland cement (commercial product), Blaine specific surface area of 3,200 cm²/g, specific gravity of 3.15 g/cm³.
Water: tap water.
Fine aggregate: river sand produced from the Himekawa River system in Niigata Prefecture.
Coarse aggregate: river gravel produced from the Himekawa River system in Niigata Prefecture.
Blast furnace slag fine powder: commercial product.
Fly ash: commercial product.
Metakaolin: commercial product.
Calcium sulfoaluminate: a trial product obtained by using calcium carbonate, calcium sulfate dihydrate, and aluminum hydroxide as first grade reagents, mixing so that the molar ratio of CaO:CaSO₄:Al₂O₃ was 4:3:1, calcining at 1,400°C for two hours, leaving the calcined product to cool to room temperature, and grinding until the Blaine specific surface area became 3,500 cm²/g.
Calcium formate: reagent.
Calcium sulfate (inorganic calcium compound): reagent.
Sodium sulfate (inorganic sulfate): anhydrous form, reagent.

### (Measurement Items)

Slump change amount: in accordance with the method specified in JIS A 1101:2020, "Method of test for slump of concrete", the slump values of concrete immediately after kneading and one hour after kneading were respectively measured. The slump values immediately after kneading were all about 12.0 cm. Using each measured slump, the slump change amount was calculated as (slump change amount)=(slump immediately after kneading)/(slump one hour after kneading), and fluidity retention was evaluated.

Initial setting time: in accordance with the method specified in JIS A 1147:2019, "Method of test for setting time of concrete", the time at which a penetration resistance value became 3.5 N/mm² was taken as the initial setting time.

Compressive strength: in accordance with the method specified in JIS A 1108:2018, "Method of test for compressive strength of concrete", the compressive strength immediately after demolding was measured.

### [Table 1]

**Table 1**

| No. | Concrete composition | | | | | | | | | | | | | Cured body | Remarks |
|---|---|---|---|---|---|---|---|---|---|---|---|---|---|---|---|
| | Binder | | | | | Aggregate | | Water (kg/m³) | Hardening accelerator for hydraulic material (kg/m³) | W/B (%) | s/a (%) | Slump change amount (%) | Initial setting time (hours) | Compressive strength (N/mm²) | |
| | Cement (kg/m³) | Blast furnace slag fine powder (kg/m³) | Fly ash (kg/m³) | Metakaolin (kg/m³) | Calcium sulfoaluminate (kg/m³) | Fine aggregate (kg/m³) | Coarse aggregate (kg/m³) | | | | | | | | |
| 1-1 | 325 | 0 | 0 | 0 | 0 | 914 | 1009 | 150 | 0.0 | 46.2 | 48.0 | 8.5 | 5.7 | 6.1 | Reference Example |
| 1-2 | 325 | 0 | 0 | 0 | 0 | 893 | 1009 | 150 | 22.8 | 46.2 | 47.4 | 4.0 | 3.5 | 12.9 | Example |
| 1-3 | 350 | 0 | 0 | 0 | 0 | 845 | 1032 | 150 | 22.8 | 42.9 | 45.5 | 3.0 | 2.9 | 16.2 | Example |
| 1-4 | 432 | 0 | 0 | 0 | 0 | 750 | 1013 | 150 | 22.8 | 34.7 | 43.0 | 4.0 | 2.5 | 22.1 | Example |
| 1-5 | 216 | 216 | 0 | 0 | 0 | 751 | 1044 | 150 | 22.8 | 34.7 | 42.3 | 6.0 | 3.1 | 15.2 | Example |
| 1-6 | 302 | 0 | 130 | 0 | 0 | 735 | 1023 | 150 | 22.8 | 34.8 | 42.3 | 4.5 | 3.6 | 15.0 | Example |
| 1-7 | 302 | 0 | 0 | 130 | 0 | 748 | 1041 | 150 | 22.8 | 34.7 | 42.3 | 7.0 | 2.7 | 20.1 | Example |
| 1-8 | 500 | 0 | 0 | 0 | 0 | 733 | 1021 | 150 | 22.8 | 30.0 | 42.3 | 5.0 | 2.0 | 25.1 | Example |
| 1-9 | 325 | 0 | 0 | 0 | 4.6 | 893 | 1009 | 150 | 18.2 | 45.5 | 47.4 | 4.0 | 3.6 | 13.1 | Example |
| 1-10 | 325 | 0 | 0 | 0 | 8.0 | 893 | 1009 | 150 | 14.8 | 45.0 | 47.4 | 4.5 | 3.9 | 13.4 | Example |
| 1-11 | 325 | 0 | 0 | 0 | 13.7 | 893 | 1009 | 150 | 9.1 | 44.3 | 47.4 | 5.5 | 4.2 | 13.3 | Example |
| 1-12 | 325 | 0 | 0 | 0 | 0.0 | 913 | 1009 | 150 | 1.0 | 46.2 | 48.0 | 7.0 | 4.6 | 8.7 | Example |
| 1-13 | 325 | 0 | 0 | 0 | 0.0 | 862 | 1009 | 150 | 50.0 | 46.2 | 46.5 | 7.0 | 2.5 | 16.5 | Example |
| 1-14 | 325 | 0 | 0 | 0 | 0.0 | 856 | 1009 | 150 | 55.0 | 46.2 | 46.4 | 9.5 | 2.7 | 15.7 | Comparative Example |

| | | | | | | | | | | | | | | | |
|---|---|---|---|---|---|---|---|---|---|---|---|---|---|---|---|
| *W/B=water/binder | | | | | | | | | | | | | | | |

### <Experimental Example 2>

Concrete compositions were prepared in the same manner as in No. 1-2 of Experimental Example 1 except that the hardening accelerator for a hydraulic material was changed to the compositions shown in Table 2, and the slump change amount, initial setting time, and compressive strength were measured. The results are also shown in Table 2.

### [Table 2]

**Table 2**

| No. | Hardening accelerator for hydraulic material | | | Slump change amount (%) | Initial setting time (min) | Compressive strength (N/mm²) | Remarks |
|---|---|---|---|---|---|---|---|
| | Calcium formate (mass%) | Calcium sulfate (mass%) | Sodium sulfate (mass%) | | | | |
| 1-1 | 0 | 0 | 0 | 8.5 | 5.7 | 6.1 | Reference Example |
| 1-2 | 60.0 | 35.0 | 5.0 | 4.0 | 3.5 | 12.9 | Example |
| 2-2 | 80.0 | 15.0 | 5.0 | 3.5 | 3.4 | 13.5 | Example |
| 2-3 | 30.0 | 65.0 | 5.0 | 7.5 | 3.3 | 12.7 | Example |
| 2-4 | 40.0 | 35.0 | 25.0 | 7.0 | 3.7 | 12.0 | Example |
| 2-5 | 60.0 | 39.0 | 1.0 | 4.0 | 3.5 | 13.1 | Example |
| 2-6 | 15.0 | 55.0 | 30.0 | 10.5 | 5.1 | 8.0 | Comparative Example |
| 2-7 | 84.5 | 15.0 | 0.5 | 9.5 | 5.0 | 8.2 | Comparative Example |
| 2-8 | 65.0 | 5.0 | 30.0 | 11.0 | 5.2 | 8.4 | Comparative Example |
| 2-9 | 20.0 | 75.0 | 5.0 | 10.0 | 5.0 | 7.6 | Comparative Example |
| 2-10 | 60.4 | 39.5 | 0.1 | 9.0 | 1.0 | 8.5 | Comparative Example |
| 2-11 | 40.0 | 25.0 | 35.0 | 10.5 | 5.2 | 7.8 | Comparative Example |

### <Experimental Example 3>

Concrete compositions were prepared in the same manner as in No. 1-2 of Experimental Example 1 except that, as inorganic calcium compounds contained in the hardening accelerator for a hydraulic material, calcium hydroxide, calcium carbonate, and calcium oxide were used in addition to calcium sulfate at proportions shown in Table 3, and the slump change amount, initial setting time, and compressive strength were measured. The results are also shown in Table 3.

### (Inorganic Calcium Compound)

Calcium hydroxide: reagent.
Calcium carbonate: reagent.
Calcium oxide: reagent.

### [Table 3]

**Table 3**

| No. | Hardening accelerator for hydraulic material | | | | | | Slump change amount (%) | Initial setting time (min) | Compressive strength (N/mm²) | Remarks |
|---|---|---|---|---|---|---|---|---|---|---|
| | Calcium formate (mass%) | Inorganic calcium compound (mass%) | | | | Sodium sulfate (mass%) | | | | |
| | | Calcium sulfate | Calcium hydroxide | Calcium carbonate | Calcium oxide | | | | | |
| 1-1 | 0 | 0 | 0 | 0 | 0.0 | 0 | 8.5 | 5.7 | 6.1 | Reference Example |
| 1-2 | 60.0 | 35.0 | 0 | 0 | 0 | 5.0 | 4.0 | 3.5 | 12.9 | Example |
| 3-1 | 60.0 | 0 | 35.0 | 0 | 0 | 5.0 | 4.5 | 3.7 | 11.8 | Example |
| 3-2 | 60.0 | 0 | 0 | 35.0 | 0 | 5.0 | 3.0 | 4.5 | 11.5 | Example |
| 3-3 | 60.0 | 0 | 0 | 0 | 35.0 | 5.0 | 5.0 | 3.8 | 12.8 | Example |
| 3-4 | 60.0 | 17.5 | 17.5 | 0 | 0 | 5.0 | 4.0 | 3.7 | 12.4 | Example |
| 3-5 | 60.0 | 17.5 | 0 | 0 | 17.5 | 5.0 | 4.5 | 3.6 | 12.7 | Example |

### <Experimental Example 4>

Concrete compositions were prepared in the same manner as in No. 1-2 of Experimental Example 1 except that, as inorganic sulfates contained in the hardening accelerator for a hydraulic material, aluminum sulfate, potassium alum, and sodium thiosulfate were used in addition to sodium sulfate at proportions shown in Table 4, and the slump change amount, initial setting time, and compressive strength were measured. The results are also shown in Table 4.

### (Inorganic Sulfate)

Aluminum sulfate: reagent.
Potassium alum: reagent.
Sodium thiosulfate: reagent.

### [Table 4]

**Table 4**

| No. | Hardening accelerator for hydraulic material | | | | | | Slump change amount (%) | Initial setting time (min) | Compressive strength (N/mm²) | Remarks |
|---|---|---|---|---|---|---|---|---|---|---|
| | Calcium formate (mass%) | Calcium sulfate (mass%) | Inorganic sulfate (mass%) | | | | | | | |
| | | | Sodium sulfate | Aluminum sulfate | Potassium alum | Sodium thiosulfate | | | | |
| 1-1 | 0 | 0 | 0 | 0 | 0 | 0 | 8.5 | 5.7 | 6.1 | Reference Example |
| 1-2 | 60.0 | 35.0 | 5 | 0 | 0 | 0 | 4.0 | 3.5 | 12.9 | Example |
| 4-1 | 50.0 | 30.0 | 20.0 | 0 | 0 | 0 | 5.0 | 3.0 | 13.3 | Example |
| 4-2 | 50.0 | 30.0 | 0 | 20.0 | 0 | 0 | 7.0 | 2.9 | 13.5 | Example |
| 4-3 | 50.0 | 30.0 | 0 | 0 | 20.0 | 0 | 6.5 | 3.1 | 12.8 | Example |
| 4-4 | 50.0 | 30.0 | 0 | 0 | 0 | 20.0 | 5.5 | 3.3 | 12.4 | Example |

### Industrial Applicability

Since the concrete composition of the present invention has favorable fluidity retention, setting property, and initial strength development property, the concrete composition may be widely applied to civil engineering and building fields, such as concrete cured bodies used in a precast method.

## Claims

1. A concrete composition comprising a binder, a hardening accelerator for a hydraulic material, and water,
wherein a binder blending amount is 300 kg/m³ or more, a water-binder ratio is 55% or less, and an addition amount of the hardening accelerator for a hydraulic material is 1 to 50 kg/m³, and
wherein the hardening accelerator for a hydraulic material contains 20.0 to 80.0 mass% of calcium formate, 15.0 to 70.0 mass% of an inorganic calcium compound, and 0.5 to 30.0 mass% of an inorganic sulfate excluding calcium sulfate.

2. The concrete composition according to claim 1,
wherein the inorganic calcium compound is one or more types selected from the group consisting of calcium sulfate, calcium hydroxide, calcium carbonate, and calcium oxide.

3. The concrete composition according to claim 1 or 2, wherein the inorganic sulfate is one or more types selected from the group consisting of sulfates, thiosulfates, sulfites, bisulfites, pyrosulfates, and pyrosulfites.

4. The concrete composition according to claim 1 or 2, wherein the binder contains 1 to 15 mass% of calcium sulfoaluminate.

5. A cured body obtained by hardening the concrete composition according to claim 1 or 2.

6. A method for producing a cured body, the method comprising curing and hardening the concrete composition according to claim 1 or 2 under a condition of a temperature of 40°C or lower.
